# EUROPÄISCHE PATENTSCHRIFT

(11) **EP 1 155 071 B1**
(45) Veröffentlichungstag und Bekanntmachung des Hinweises auf die Patenterteilung: **06.05.2004**
(21) Anmeldenummer: 00906274.6
(22) Anmeldetag: 03.02.2000
(51) Int. Cl.: C08K 3/34, C08K 7/00

(54) **TRANSPARENTE BIAXIAL ORIENTIERTE POLYOLEFINFOLIE**
TRANSPARENT BIAXIALLY ORIENTED POLYOLEFIN FILM
FILM DE POLYOLEFINE BIORIENTE TRANSPARENT

(30) Priorität: 10.02.1999 DE 19905415
(43) Veröffentlichungstag der Anmeldung: 21.11.2001
(73) Patentinhaber: Trespaphan GmbH, 66539 Neunkirchen (DE)
(72) Erfinder: RASP, Wolfgang, D-66424 Homburg (DE); HÜTT, Detlef, D-66265 Heusweiler (DE)
(74) Vertreter: Luderschmidt, Schüler & Partner GbR
(86) Internationale Anmeldenummer: PCT/EP2000/000853
(87) Internationale Veröffentlichungsnummer: WO 2000/047661

(56) Entgegenhaltungen:
- EP-A- 0 669 365
- US-A- 4 467 077

## Beschreibung

Die Erfindung betrifft eine lasermarkierbare, transparente, orientierte Polyolefinfolie.

Im Stand der Technik sind Verfahren zur Markierung von polymeren Materialien bekannt. Derartige Materialien enthalten einen strahlungsempfindlichen Zusatz, welcher unter Einwirkung von Strahlung in bestimmten Wellenlängenbereichen eine Verfärbung des Materials bewirkt. Diese Zusätze bezeichnet man als Laserpigmente.

Ebenso sind im Stand der Technik Folien aus Polyolefinen bekannt, welche für bestimmte Anwendungszwecke biaxial orientiert werden und im allgemeinen eine Dicke im Bereich von 3 bis 100 µm haben. Es ist bekannt, biaxial orientierte Folien durch geeignete Zusätze zu modifizieren. Derartige Zusätze können die Reibung, die Antistatik, die thermische Stabilität, die Optik oder andere Folieneigenschaften verbessern. Diese Zusätze dürfen jedoch bei transparenten Folien die Optik nicht beeinträchtigen, d.h. insbesondere nicht die Trübung erhöhen oder den Glanz vermindern.

EP 0 669 365 beschreibt eine polyolefinische markierbare Zusammensetzung, welche bei Bestrahlung mit einem Laserstrahl mit einer markanten dunkelbraunen bis schwarzen Markierung versehen werden kann. Die markierbare Zusammensetzung enthält 0,005 bis 0,5 Gew.-% eines Zusatzstoffes, welcher auf einer Silikonverbindung beruht. Diese Lehre erwähnt die Verwendung der Zusammensetzung zur Herstellung von Folien. Die Folien sind hinsichtlich ihrer optischen Eigenschaften verbesserungsbedürftig.

Die Aufgabe der vorliegenden Erfindung bestand daher darin, eine lasermarkierbare, transparente, biaxial orientierte Polypropylenfolie zur Verfügung zu stellen. Insbesondere soll die Folie durch geeignete Verfahren mit Laserlicht unterschiedlicher Wellenlängen zu markieren sein. Dabei dürfen keine durchgängigen Löcher durch den Laserstrahl in der Folie erzeugt werden. Gleichzeitig soll die Folie eine hohe Transparenz und eine gleichmäßige Optik ohne Stippen und Blasen aufweisen.

Diese Aufgabe wird durch eine transparente, ein- oder mehrschichtige, orientierte Polyolefinfolie aus mindestens einer Schicht gelöst, welche ein Schichtsilikat enthält (nachstehend "die Schicht" genannt), welches eine unregelmäßige Oberflächenstruktur und keine Beschichtung aus Metalloxiden aufweist. Die Unteransprüche geben bevorzugte Ausführungsformen der Erfindung an.

Die Schicht der Folie enthält im allgemeinen mindestens 85 Gew.-%, vorzugsweise 90 bis <100 Gew.-%, insbesondere 98 bis <100 Gew.-%, jeweils bezogen auf die Schicht, eines Polyolefins, vorzugsweise eines Propylenpolymeren.

Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenpolymere.

Bevorzugt sind isotaktische Propylenhomopolymere mit einem Schmelzpunkt von 140 bis 170 °C, vorzugsweise von 155 bis 165°C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 1 bis 10 Gew.-%, vorzugsweise 2-5 Gew.-% bezogen auf das Ausgangspolymer.

Die Molekulargewichtsverteilung des Propylenpolymeren kann je nach Anwendungsgebiet in breiten Grenzen variieren. Das Verhältnis des Gewichtsmittels M_{w} zum Zahlenmittel Mₙ liegt im allgemeinen zwischen 1 und 15.

In einer bevorzugten Ausführungsform der erfindungsgemäßen Folie liegt das Verhältnis des Gewichtsmittels M_{w} zum Zahlenmittel Mₙ bei 2 bis 10, ganz besonders bevorzugt bei 2 bis 6. Eine derartig enge Molekulargewichtsverteilung des Propylenhomopolymeren der Schicht erreicht man beispielsweise durch dessen peroxidischen Abbau oder durch Herstellung des Polypropylens mittels geeigneter Metallocenkatalysatoren.

In einer bevorzugten Ausführungsform der Erfindung ist das eingesetzte Polypropylen hochisotaktisch. Für derartige hochisotaktische Polypropylene beträgt der mittels ¹³C-NMR-Spektroskopie bestimmte Kettenisotaxie-Index des n-heptanunlöslichen Anteils des Polypropylens mindestens 95 %, vorzugsweise 96 bis 99 %.

Es ist erfindungswesentlich, daß mindestens eine Schicht der Folie ein Pigment auf Basis von Schichtsilikat oder Schichtsilikaten enthält, welches eine unregelmäßige Oberflächenstruktur und keine Beschichtung aus Metalloxiden aufweist.

Die Schicht enthält das Pigment im allgemeinen in einer Menge von 0,01 bis 4 Gew.-%, vorzugsweise 0,5 bis 2,5 Gew.-%, insbesondere 0,8 bis 1,5 Gew.-%, bezogen auf das Gesamtgewicht der Folie. Es wurde gefunden, daß die Konzentration an Pigment in Gew.-% von der jeweiligen Schichtdicke der pigmentierten Schicht, bzw. Schichten abhängen. Dicke Schichten zeigen bereits mit vergleichsweise geringen Konzentrationen den gleichen Effekt wie dünnere Schichten bei höheren Konzentrationen. Es ist daher bevorzugt, daß die Pigmentkonzentration pro Flächeneinheit der Folie in einem Bereich von 0,1 bis 1,0 g/m², vorzugsweise 0,1 bis 0,7 g/m², insbesondere 0,10 bis 0,30 g/m² liegt. Diese Flächenkonzentration reicht aus, um sicherzustellen, daß der Laserstrahl die Folie nicht ungehindert durchdringen kann, sondern in der pigmentierten Schicht auf ein Pigmentteilchen trifft. Dieser Bereich für die Flächenkonzentration gilt unabhängig von der Foliendicke, der Schichtdicke und der Anzahl der Schichten.

Die auf Schichtsilikat basierenden Pigmente werden aus Schichtsilikaten mit plättchenförmiger Struktur hergestellt. Als Schichtsilikate sind Glimmer besonders geeignet, worunter Muscovit, Biotit, Phlogopit, Vermicullit sowie synthetische Glimmer besonders bevorzugt sind. Diese an sich bekannten Ausgangsstoffe werden auch zur Herstellung von Perlglanzpigmenten verwendet. Zur Veränderung der Oberflächenstruktur der Schichtsilikate werden diese einem Trockenmahlverfahren wie in DE 44 41 223 beschrieben unterworfen. Dabei werden die Bedingungen während des Mahlvesfahrens so gewählt, daß die ursprünglich glatte Oberflächenstruktur der Schichtsilikate weitestgehend zerstört wird, so daß die trocken gemahlenen Pigmente eine rauhe Oberflächenstruktur aufweisen.

In einem Trockenmahlverfahren wird beispielsweise Glimmer in eine Rührwerkskugelmühle eingebracht und mit Mahlkörpern, z.B. aus Korund kontinuierlich zerkleinert. Die Mahlbedingungen können von einem Fachmann ohne weiteres erfinderisches Zutun so eingestellt werden, daß die plättchenförmigen Glimmerpartikel zerkleinert werden und die ursprünglich glatte Oberfläche stark aufgerauht wird. Der plättchenförmige Charakter der Pigmentstruktur bleibt dabei in einem gewissen Maße erhalten. Alle bekannten Trockenmahlverfahren, welche entsprechend gesteuert werden können, sind grundsätzlich geeignet.

Die trockengemahlenen Pigmente werden anschließend klassiert, vorzugsweise durch Windsichten. Derartige Verfahren sind bekannt. Nach dem Stand der Technik werden die Pigmente anschließend mit einer geeigneten Beschichtung aus Metalloxiden oder Metaltoxidhydraten versehen. Dadurch wird eine hohe Farbintensität und ein hohes Deckvermögen der Pigmente erzielt. Diese Eigenschaften sind für viele Anwendungen besonders wünschenswert.

Im Rahmen der vorliegenden Erfindung wurde festgestellt, daß es vorteilhaft ist, wenn die trocken gemahlenen Pigmente nicht mit einer derartigen Beschichtung versehen werden. Die orientierten Folien mit einem unbeschichteten Laserpigment sind vorteilhaft, da die Lasermarkierung als weiße Markierung in einer transparenten Folie umso besser sichtbar ist je weniger die Folie eingetrübt ist, als bei Verwendung eines beschichteten Pigments. Darüber hinaus bleibt die gewünschte Transparenz der orientierten Folie mit unbeschichtetem Pigment überraschenderweise nahezu unverändert erhalten. Bei Einarbeitung von beschichteten Pigmenten wird die orientierte Folie stark eingetrübt.

Es wurde gefunden, daß die Vermahlung zur Erzeugung rauher Oberflächen, - aber keine Beschichtung mit Metalloxiden- wesentlich ist, um zu einer transparenten, lasermarkierbaren, orientierten Folie zu gelangen. Es wird vermutet, daß die rauhe und unebene Oberfläche der Pigmente, welche durch das Vermahlen erzeugt wird, die Haftung der Polymeren zur Oberfläche der Pigmente so verbessert, daß es beim Streckprozeß nicht zu Abrissen und Vakuolenbildung kommt. Solche Schichtsilikate, die nach der Vermahlung mit Metalloxiden beschichtet werden, erzeugen eine starke Eintrübung der Folie.

Des weiteren wurde im Rahmen der vorliegenden Erfindung festgestellt, daß eine optimale Teilchengröße für eine ausgewogenes Verhältnis von Lasermarkierbarkeit und optischen Eigenschaften der Folie für ein gegebenes Laserpigment experimentell leicht bestimmt werden kann. Dabei sollte die mittlere Teilchengröße nicht zu klein gewählt werden. Mit kleiner werdender mittlerer Teilchengröße erhöht sich nach Durchlaufen der optimalen mittleren Teilchengröße die Trübung der Folie. Des weiteren wurde gefunden, daß auch die Lasermarkierbarkeit von dieser mittleren Teilchengröße abhängig ist. Die Empfindlichkeit gegenüber dem Laser nimmt ab, wenn die Wellenlänge des Laserlichts um mehr als den Faktor 3 größer ist als der Teilchenmesser. Z.B. liegt bei Verwendung eines CO₂-Lasers die optimale mittlere Teilchengröße für trocken vermahlenen Glimmer im Bereich von 4,5 bis 5,5 µm, bestimmt mittels einer Bildanalyse unter dem Elektronenmikroskop (SEM-IPS).

Zusätzlich zu den erfindungswesentlichen Laserpigmenten kann die Schicht übliche Additive wie Neutralisationsmittel, Stabilisatoren, Antistatika und/oder Gleitmittel in jeweils wirksamen Mengen enthalten.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Schicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Die vorstehenden Angaben in % beziehen sich jeweils auf das Gewicht der Schicht.

Die erfindungsgemäße Polyolefinfolie umfaßt in einer bevorzugten Ausführungsform eine oder beidseitig Deckschicht/en aus Polymeren aus α-Olefinen mit 2 bis 10 Kohlenstoffatomen, welche auf der laserpigmenthaltigen Schicht oder auf einer Zwischenschicht aufgebracht sind.

Beispiele für derartige α-olefinische Polymere der Deckschicht/en sind
Propylenhomopolymere
ein Copolymer von
Ethylen und Propylen oder
Ethylen und Butylen-1 oder
Propylen und Butylen-1 oder
ein Terpolymer von
Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,
wobei insbesondere
statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder
statistische Ethylen-Propylen-Butylen-1-Terpolymere mit
einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder
ein Blend aus einem Ethylen-Propylen-Butylen-1-Terpolymeren und
einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,
bevorzugt sind.

Die in der oder den Deckschicht eingesetzten vorstehend beschriebenen Co- und/oder Terpolymere weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymere in der gleichen Weise wie vorstehend für die Schicht beschrieben peroxidisch abgebaut sein, wobei grundsätzlich die gleichen Peroxide verwendet werden. Der Abbaufaktor für die Deckschichtpolymere liegt im allgemeinen in einem Bereich von 3 bis 15, vorzugsweise 6 bis 10.

Gegebenenfalls können der/den Deckschichtlen die vorstehend für die Schicht beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die erfindungsgemäße Folie umfaßt mindestens eine Schicht, welche Laserpigmente enthält. Diese pigmenthaltige Schicht ist vorzugsweise die Basisschicht einer drei- oder fünfschichtigen Ausführungsform. Gegebenenfalls kann die pigmenthaltigge Schicht auch die Zwischenschicht einer vier- oder fünfschichtigen Ausführungsform sein. In einer weiteren Ausführungsform sind Pigmente sowohl in der Basisschicht als auch in der Zwischenschicht eingearbeitet. Eine weitere Variante der Erfindung ist ein Aufbau, bei der auch die Deckschicht, zusätzlich zur pigmenthaltigen Basis- und/oder Zwischenschicht, Laserpigmente enthält.

Die Dicke der Deckschicht/en ist größer als 0,1 µm und liegt vorzugsweise im Bereich von 0,3 bis 3 µm, insbesondere 0,4 bis 1,5 µm, wobei beidseitige Deckschichten gleich oder verschieden dick sein können.

Die Zwischenschicht/en kann/können aus den für die Basisschicht beschriebenen α-olefinischen Polymeren bestehen. Die Zwischenschicht/en kann/können die für die einzelnen Schichten beschriebenen üblichen Additive wie Antistatika, Neutralisationsmittel, Gleitmittel und/oder Stabilisatoren, sowie gegebenenfalls Antiblockmittel, enthalten. Die Dicke der Zwischenschicht/en ist größer als 0,3 µm und liegt vorzugsweise im Bereich von 1,0 bis 15 µm, insbesondere 1,5 bis 10 µm.

Die Gesamtdicke der erfindungsgemäßen Polyolefinfolie kann innerhalb weiter Grenzen variieren und richtet sich nach dem beabsichtigten Einsatz. Sie beträgt vorzugsweise 4 bis 60 µm, insbesondere 5 bis 50 µm, vorzugsweise 10 bis 35 µm, wobei die Schicht etwa 40 bis 100 % der Gesamtfoliendicke ausmacht.

Die Erfindung betrifft weiterhin ein Verfahren zur Herstellung der erfindungsgemäßen Polyolefinfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gestreckt (orientiert), die gestreckte Folie thermofixiert und gegebenenfalls an der zur Behandlung vorgesehenen Oberflächenschicht corona- oder flammbehandelt wird.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die Simultane Streckung kann im Flachfolienverfahren oder im Blasverfahren ausgeführt werden. Die weitere Beschreibung der Folienherstellung erfolgt am Beispiel einer Flachfolienextrusion mit anschließender sequentialer Streckung.

Zunächst wird wie beim Extrusionsverfahren üblich das Polymer bzw. die Polymermischung der einzelnen Schichten in einem Extruder komprimiert und verflüssigt, wobei die Laserpigmente und andere gegebenenfalls zugesetzte Additive bereits im Polymeren bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 4 bis 8 vorzugsweise 5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 50°C, zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Bevorzugt wird/werden nach der biaxialen Streckung eine oder beide Oberftäche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Die Oberflächenbehandlung der Folie wird hier am Beispiel der Coronabehandlung beschrieben.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die erfindungsgemäße Folie kann durch an sich bekannte Verfahren mittels Laser beschriftet werden. Hierfür wird die Folie in den Strahlengang eines gepulsten Lasers, vorzugsweise eines gepulsten CO₂ - oder eines Nd-YAG- oder Excimer-Lasers gebracht Die Wahl des Lasers richtet sich nach der Wellenlänge, bei welcher das Pigment einen möglichst hohen Absorptionsquerschnitt aufweist. Der Farbton und die Farbtiefe der Markierung hängen von der Bestrahlungszeit und der Energiedichte der Strahlung ab.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Mittlere Teilchengröße

Die mittlere Teilchengröße wurde mittels Bildanalyse ermittelt. Hierfür wird eine Probe in Wasser zur Vereinzelung der Teilchen dispergiert und auf einen Glasträger aufgebracht. Anschließend wird die Probe getrocknet und unter dem Rasterelektronenmikroskop untersucht. Hierfür werden durch eine geeignete Einstellung von Helligkeit und Kontrast die einzelnen Teilchen als Grauwertabbildung sichtbar gemacht. Über eine Fläche von 10mm² wird die jeweilige Fläche der vereinzelten Teilchen gemessen und der Teilchendurchmesser als Durchmesser eines flächengleichen Kreises ausgegeben. Diese Meßwerte werden nach Größenbereichen klassiert und geben die Verteilung der Teilchengröße an. Der mittlere Teilchendurchmesser wird als Mittelwert der Verteilungskurve bestimmt.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Molekulargewichtsbestimmung

Die mittleren Molmassen Mw und Mn und die mittlere Molmassen-Dispersität Mw/Mn wurden in Anlehnung an DIN 55672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈135 °C) durchgeführt.

Die Erfindung wird nachstehend durch Ausführungsbeispiele erläutert.

### Herstellung von trocken gemahlenem Glimmer:

Natürlich vorkommender Glimmer mit einem Plättchendurchmesser von ca 2cm wurde in einer industriellen Rührwerkskugelmühle mit Korundmahlkörpem von 5 mm Durchmesser trocken gemahlen. Das Mahlgut wurde anschließend in einem Windsichter so klassiert, daß eine Fraktion mit einem mittleren Teilchendurchmesser von ca. 5µm und einem Cut-off von 15µm erhalten wurde. Die so erhaltenen Pigmente wurden direkt, d.h. ohne weitere Metalloxid-Beschichtung in Propylenhomopolymer mit einem Schmelzpunkt von 166 °C und einem Schmelzflußindex von 3,4 g/10min eingearbeitet. Auf diese Weise wurde ein Masterbatch aus 60 Gew.-% Propylenhomopolymer und 40 Gew.-% trocken gemahlenem, metalloxid freiem Glimmer (nachstehend Laserpigment genannt) erhalten.

### Beispiel 1

Es wurde durch Coextrusion und anschließende stufenweise Orientierung in Längs- und Querrichtung eine transparente fünfschichtige Folie mit symmetrischem Aufbau mit einer Gesamtdicke von 30 µm hergestellt. Die Deckschichten hatten eine Dicke von jeweils 0,7 µm. Die Zwischenschichten hatten jeweils eine Dicke von 5 µm.

### Basisschicht:

- 96,74 Gew.-%: isotaktisches Propylenhomopolymer mit einem Schmelzpunkt von 166 °C und einem Schmelzflußindex von 3,4 g/10min
- 3,00 Gew.-%: des vorstehend beschriebenen Masterbatchs aus 60 Gew.% Propylenhomopolymer und 40 Gew.-% des Laserpigments, entsprechend einem Gehalt von 1,2 Gew.-% Laserpigment bezogen auf die Schicht
- 0,14 Gew.-%: Armostat
- 0,12 Gew.-%: Erucasäureamid

### Zwischenschichten:

- 100 Gew.-%: isotaktisches Propylenhomopolymer mit einem Schmelzpunkt von 166 °C und einem Schmelzflußindex von 3,4 g/10min

### Deckschichten:

- 98,8 Gew.-%: statistisches Ethylen-Propylen-Butylen-Terpolymer mit einem Ethylengehalt von 3 Gew.-% und einem Butylengehalt von 7 Gew.-% (Rest Propylen)
- 0,2 Gew.-%: SiO₂ als Antiblockmittel mit einer mittleren Teilchengröße von 2 µm

Die Herstellungsbedingungen in den einzelnen Verfahrensschritten waren:

| | | | |
|---|---|---|---|
| Extrusion | Temperaturen | Basisschicht | 260 °C |
| | | Zwischenschichten | 255 °C |
| | | Deckschichten | 240 °C |
| | Temperatur der Abzugswalze | | 20 °C |
| Längsstreckung | Temperatur | | 110 °C |
| | Längsstreckverhältnis | | 5,5 |
| Querstreckung | Temperatur | | 160 °C |
| | Querstreckverhältnis | | 9 |
| Fixierung | Temperatur | | 150 °C |
| | Konvergenz | | 5 % |

### Beispiel 2

Es wurde eine Folie wie in Beispiel 1 beschrieben hergestellt. Im Unterschied zu Beispiel 1 umfaßte die Folie jedoch keine Zwischenschichten. Die Foliendicke der dreischichtigen Ausführungsform betrug daher nur 20 µm. Die übrige Zusammensetzung und die Herstellbedingungen wurden gegenüber Beispiel 1 nicht geändert.

### Beispiel 3

Es wurde eine Folie wie in Beispiel 1 beschrieben hergestellt. Im Unterschied zu Beispiel 1 enthielt die Basisschicht kein Laserpigment. Dafür wurden in die Zwischenschicht Laserpigment in einer Menge von 2,2 Gew.-% bezogen auf das Gewicht der Schicht über das 40%ige Masterbatch (d.h. 5,6 % Masterbatch) eingearbeitet. Die übrige Zusammensetzung und die Herstellbedingungen wurden gegenüber Beispiel 1 nicht geändert.

### Beispiel 4

Es wurde eine Folie wie in Beispiel 1 beschrieben hergestellt. Im Unterschied zu Beispiel 1 wurde in die Basisschicht 1,95 Gew.-% des 40%igen Masterbatches, entsprechend einem Gehalt von 0,78 Gew.-%, bezogen auf das Gewicht der Basisschicht, eingearbeitet. Zusätzlich wurden 1,95 Gew.-% des 40%igen Masterbatches in die jeweiligen Zwischenschichten eingearbeitet, entsprechend einem Gehalt von 0,78 Gew.-%, bezogen auf das Gewicht der jeweiligen Zwischenschicht. Die übrige Zusammensetzung und die Herstellbedingungen wurden gegenüber Beispiel 1 nicht geändert.

### Beispiel 5

Es wurde eine Folie wie in Beispiel 2 beschrieben hergestellt, wobei die Basisschicht jetzt nur 0,6 Gew.-% des Laserpigments enthielt. Die übrige Zusammensetzung und die Herstellbedingungen wurden gegenüber Beispiel 2 nicht geändert.

### Vergleichsbeispiel 1

Es wurde eine Folie wie in Beispiel 1 beschrieben hergestellt. Im Unterschied zu Beispiel 1 enthielt die Folie jetzt in der Basisschicht anstelle des trockenvermahlenen Glimmers mit rauher Oberfläche und ohne Metalloxidbeschichtung einen naß vermahlenen Glimmer mit einer glatten plättchenförmigen Struktur. Für die Naßvermahlung wird ein feuchter Brei des plättchenförmigen Glimmers zwischen zwei relativ zueinander bewegten Flächen zerrieben. Der Glimmer wurde dabei hauptsächlich durch Scherkräfte zerkleinert, wodurch die ursprüngliche Plättchenform weitgehend erhalten blieb. Der mittlere Teilchendurchmesser des naßvermahlenen Glimmers betrug ebenfalls ca. 5µm, bei einem Cut-Off von 15µm. Die übrige Zusammensetzung und die Herstellbedingungen wurden gegenüber Beispiel 1 nicht geändert.

### Vergleichsbeispiel 2

Es wurde eine Folie wie in Beispiel 1 beschrieben hergestellt. Im Unterschied zu Beispiel 1 enthielt die Folie jetzt in der Basisschicht anstelle des trocken-vermahlenen Glimmers mit rauher Oberfläche und ohne Metalloxidbeschichtung einen trocken-vermahlenen Glimmer mit TiO₂ -Beschichtung. Hierfür wurde der Glimmer nach dem trockenen Vermahlen (wie vorstehend beschrieben) in Wasser suspendiert und unter Rühren auf ca. 75°C erwärmt. Mit 10%iger Salzsäure wird ein pH von 2,2 eingestellt. Anschließend wurde TiCl₄ - Lösung zu der Glimmersuspension hinzugefügt, wobei der pH-Wert mit 32%iger Natronlauge konstant gehalten wurde. Nach erfolgter Zugabe der TiCl₄ - Lösung wird mit Natronlauge ein pH von 7 eingestellt und nachgerührt. Anschließend wird mit Wasser chloridfrei gewaschen und bei 110°C getrocknet. Abschließend wurden die Pigmente 1 Stunde bei ca. 700°C geglüht. Die übrige Zusammensetzung und die Herstellbedingungen wurden gegenüber Beispiel 1 nicht geändert.

Die nach den Beispielen und den Vergleichsbeispielen hergestellten Folien wurden mittels eines CO₂-Lasers bei einer Wellenlänge von 9,3 µm und einer Energiedichte von 5 bis 7 J/cm² für eine Dauer von 0,2 µsec bestrahlt und mit einem Bar-Code markiert. Die Ergebnisse nach den Beispielen und Vergleichsbeispielen sind in der nachstehenden Tabelle zusammengefaßt.

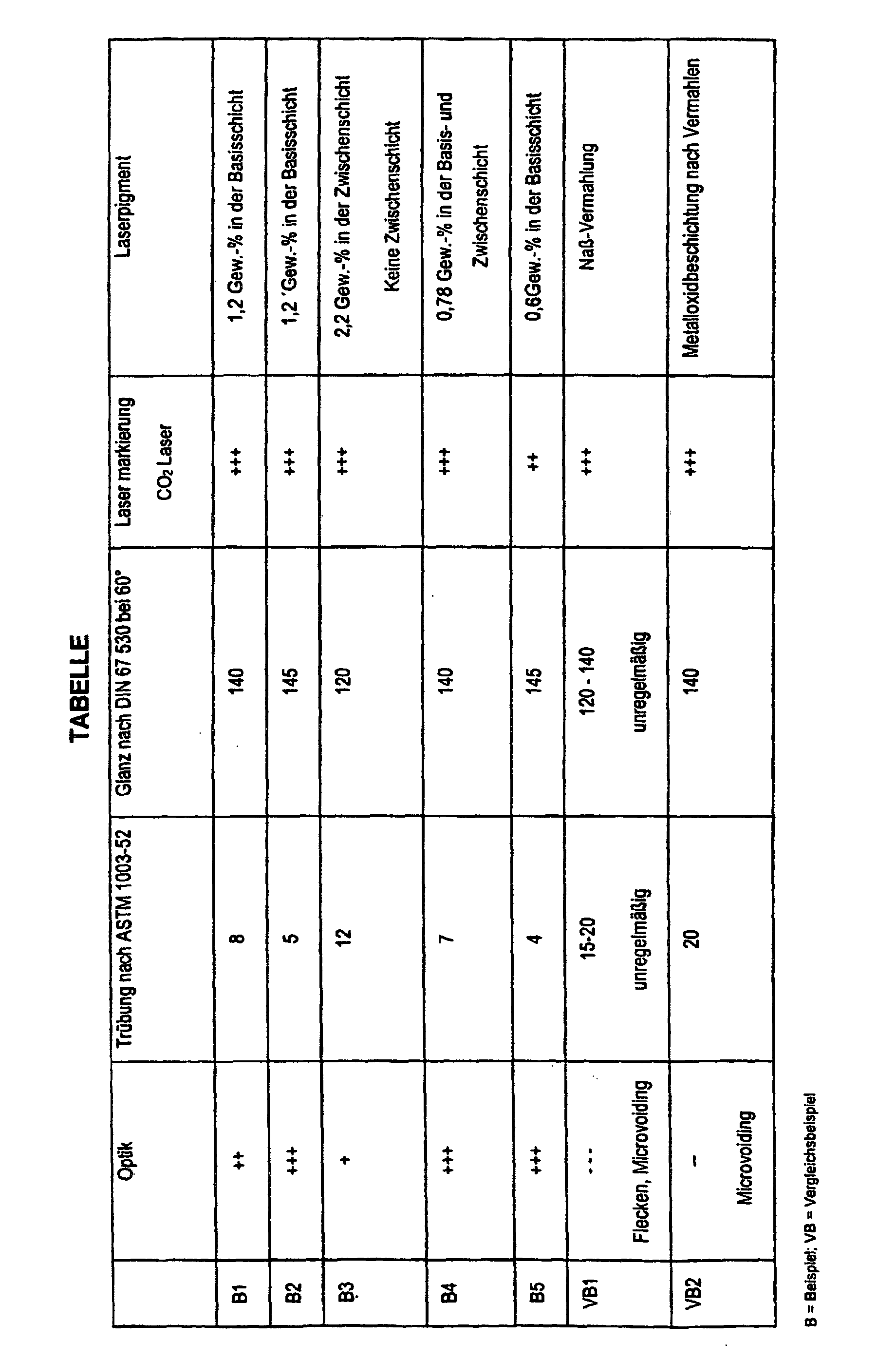

## Patentansprüche

1. Transparente, ein- oder mehrschichtige biaxial orientierte Polypropylenfolie aus einer mindestens einer Schicht, **dadurch gekennzeichnet, daß** die Folie in mindestens einer Schicht ein Schichtsilikat enthält, welches einem Trockenmahlverfahren unterworfen wurde und eine unregelmäßige Oberflächenstruktur und keine Beschichtung aus Metalloxiden aufweist.

2. Polyolefinfolie gemäß Anspruch 1, **dadurch gekennzeichnet, daß** Schichtsilikat ein Glimmer, vorzugsweise Muscovit, Biotit, Phlogopit, Vermiculit oder synthetischer Glimmer ist.

3. Polyolefinfoliegemäß nach Anspruch 1 und/oder 2, **dadurch gekennzeichnet, daß** die mittlere Teilchengröße 1 bis 10 µm, vorzugsweise 2 bis 8µm beträgt.

4. Polyolefinfolie gemäß einem oder mehreren der Ansprüche 1 bis 3, **dadurch gekennzeichnet, daß** das Schichtsilikat in der Basisschicht und/oder in einer Zwischenschicht und/oder in einer Deckschicht ist.

5. Polyolefinfolie gemäß einem oder mehreren der Ansprüche 1 bis 4, daß das Schichtsilikat in einer Konzentration von 0,1 bis 1,0 g/m², vorzugsweise 0,1 bis 0,7 g/m², insbesondere 0,10 bis 0,30 g/m² in der Folie enthalten ist.

6. Polyolefinfolie gemäß einem oder mehreren der Ansprüche 1 bis 5, **dadurch gekennzeichnet, daß** die Folie eine Dicke von 3 bis 100µm, vorzugsweise 5 bis 50µm aufweist.

7. Verwendung einer der Folien nach den Ansprüchen 1 bis 6 zur Markierung mittels Laser, vorzugsweise mittels CO₂ Laser oder mittels Nd-YAG Laser oder mittel Excimer-Laser.

8. Verwendung einer orientierten lasermarkierten Folien nach Anspruch 1 bis 6 als Verpackungsfolie.

9. Verfahren zur Markierung einer Folie nach den Ansprüchen 1 bis 6 mittels Laser.

10. Verfahren zur Herstellung einer Polyolefinfolie gemäß Anspruch 1, **dadurch gekennzeichnet, daß** die Orientierung in Längsrichtung mit einem Längsstreckverhältnis von 3:1 bis 9:1 und/oder in Querrichtung mit einem Querstreckverhältnis von 4:1 bis 10:1 erfolgt.

## Claims

1. Transparent, single- or multilayered, biaxially oriented polypropylene film comprising at least one layer, **characterized in that** the film comprises in at least one layer a phyllosilicate which has been subjected to a dry-grinding process and has an irregular surface structure and no metal oxide coating.

2. Polyolefin film according to Claim 1, **characterized in that** the phyllosilicate is a mica, preferably muscovite, biotite, phlogopite, vermiculite or synthetic mica.

3. Polyolefin film according to Claim 1 and/or 2, **characterized in that** the mean particle size is from 1 to 10 µm, preferably from 2 to 8 µm.

4. Polyolefin film according to one or more of Claims 1 to 3, **characterized in that** the phyllosilicate is in the base layer and/or in an intermediate layer and/or in a top layer.

5. Polyolefin film according to one or more of Claims 1 to 4, **characterized in that** the phyllosilicate is present in the film in a concentration of from 0.1 to 1.0 g/m², preferably from 0.1 to 0.7 g/m², in particular from 0.10 to 0.30 g/m².

6. Polyolefin film according to one or more of Claims 1 to 5, **characterized in that** the film has a thickness of from 3 to 100 µm, preferably from 5 to 50 µm.

7. Use of one of the films according to one of Claims 1 to 6 for marking by means of a laser, preferably by means of a CO₂ laser or by means of an Nd:YAG laser or by means of an excimer laser.

8. Use of an oriented, laser-marked film according to one of Claims 1 to 6 as packaging film.

9. Process for the marking of a film according to one of Claims 1 to 6 by means of a laser.

10. Process for the production of a polyolefin film according to Claim 1, **characterized in that** the orientation in the longitudinal direction is carried out with a longitudinal stretching ratio of from 3:1 to 9:1 and/or the orientation in the transverse direction is carried out with a transverse stretching ratio of from 4:1 to 10:1.

## Revendications

1. Film de polypropylène transparent monocouche ou multicouches biaxialement orienté, constitué par au moins une couche, **caractérisé en ce que** le film contient dans au moins une couche un phyllosilicate, lequel a été soumis à un procédé de broyage à sec et présente une structure de surface irrégulière et aucune enduction d'oxydes métalliques.

2. Film de polyoléfine selon la revendication 1, **caractérisé en ce que** le phyllosilicate est un mica, de préférence de la muscovite, de la biotite, de la phlogopite, de la vermiculite ou un mica synthétique.

3. Film de polyoléfine selon la revendication 1 et/ou 2, **caractérisé en ce que** la dimension moyenne de particule est de 1 à 10 µm, de préférence de 2 à 8 µm.

4. Film de polyoléfine selon l'une ou plusieurs des revendications 1 à 3, **caractérisé en ce que** le phyllosilicate est dans la couche de base et/ou dans une couche intermédiaire et/ou dans une couche de surface.

5. Film de polyoléfine selon l'une ou plusieurs des revendications 1 à 4, **caractérisé en ce que** le phyllosilicate est contenu dans le film dans une concentration de 0,1 à 1,0 g/m², de préférence de 0,1 à 0,7 g/m², en particulier de 0,10 bis 0,30 g/m².

6. Film de polyoléfine selon l'une ou plusieurs des revendications 1 à 5, **caractérisé en ce que** le film a une épaisseur de 3 à 100 µm, de préférence de 5 à 50 µm.

7. Utilisation de l'un des films selon les revendications 1 à 6 destiné au marquage par laser, de préférence par un laser CO₂ , ou par laser Nd-YAG ou par laser à excimères.

8. Utilisation d'un film orienté marqué au laser selon les revendications 1 à 6 en tant que film d'emballage.

9. Procédé destiné au marquage d'un film selon les revendications 1 à 6 au moyen d'un laser.

10. Procédé destiné à la fabrication d'un film de polyoléfine selon la revendication 1, **caractérisé en ce que** l'orientation dans le sens longitudinal s'effectue dans un rapport d'étirage longitudinal de 3 à 1 jusqu'à 9 à 1 et/ou dans le sens transversal dans un rapport d'étirage transversal de 4 à 1 jusqu'à 10 à 1.
